# EUROPEAN PATENT APPLICATION

(11) **EP 2 725 822 A1**
(43) Date of publication of application: **30.04.2014**
(21) Application number: 12189954.6
(22) Date of filing: 25.10.2012
(51) Int. Cl.: H04W 4/00

(54) **Electric generator control system and method**

(71) Applicant: Telefonica S.A., 28013 Madrid (ES)
(72) Inventor: Zorzano Mier, Francisco, Javier, 28013 Madrid (ES)
(74) Representative: Carpintero Lopez, Francisco

(57) **Abstract**

System for remote managing of physical devices (101) using M2M communications and comprising a backend (140), with which the physical devices (101) communicate, and a frontend (190) through which the user (110) exchanges information with the physical devices (101). A physical device (101) comprises physical modules (111, 112, 113) and a power supply (115) connected by an internal bus (151), and a core module (120) also connected to the physical modules (111, 112, 113) and power supply (115) by the internal bus (151). The core module (120) connects with the backend (140) for exchanging information of every physical module (111, 112, 113) connected to said core module (120). Modularity of the system allows combining of different funcionalities of sensor and actuator devices, since each physical module (111, 112, 113) has associated at least one virtual module (131, 132, 133, 134) managed by the backend (140) as a single unit.

## Description

### TECHNICAL FIELD OF THE INVENTION

The present invention has its application within the telecommunications sector and, especially, in the industrial area engaged in Machine-to-Machine (M2M) communications and Internet of Things (IoT) frameworks, and, more particularly, relates to a system for remote management of devices using M2M connections and communications over IP (Internet protocol) networks.

### BACKGROUND OF THE INVENTION

The Internet of Things (IoT) refers to uniquely identifiable objects (things) and their virtual representations in an Internet-like structure.

Machine-to-machine (M2M) refers to technologies, which allow both wireless and wired networks for communication with devices, in which a device (such as a sensor or an actuator) is used to capture an event (such as temperature, sound, vibration, pressure, motion, pollutants, inventory level, etc.), which is relayed through a network (wireless, wired or hybrid) to an application (software program) that translates the captured event into meaningful information.

Nowadays, electronics and communication technologies allow the deployment of electronic sensors or actuators in different objects and environments and also allow them to communicate with software systems running in central services. Sensors range from light or smoke detectors to video cameras or microphones. Actuators may be relays, servos and other engines, electrovalves, projectors, speakers, etc...

Typically, a system using M2M/IoT technologies involves several elements as follows:
- Devices: The devices are the physical elements deployed to get sensing information or to act. Typically they include the electronic sensors or actuators, one or more microprocessors, a modem or other kind of component for communications, a power source and some kind of casing, appropriate for the use and environment of deployment.
- Firmware: The embedded microprocessor executes certain software, which is called the firmware and determines the sensor behaviour as well as the communications.
- Network: Different communication networks are used to send and receive data. When wiring is available, Ethernet may be used. In well connected buildings and their surroundings, wireless communication as WiFi is another solution. The best solution for coverage and simplicity is the 2G or 3G mobile phone network. In extreme situations (wilderness, high seas), satellite connections can be used but they are extremely expensive and consume lots of energy. Many times devices are deployed forming a local network, connected through short range radio links. One of the devices of the network retransmits as a bridge to a wider network. Bluetooth or Zigbee and similar protocols are used for this local network. Also, devices may connect to the backend either through a VPN (Virtual Private Network) or through the IP internet.
- Backend or Mediation layer: Devices communicate with one or more systems forming the backend, also called Mediation layer as defined in IoT/M2M. Mediation layer provides a set of services, including data collection, event management, and configuration services. Data coming from the devices is registered in the system. The system also communicates the devices pending orders. Backends can execute automatically certain actions whenever some conditions are given. Backends can also gather information from other sources, such as corporate systems or Internet services.
- Frontend: Finally the information gathered has to be offered to a user, which is at the so-called Frontend, either through a web interface, a mobile application (app) or an automatic Application Program Interface (API). This front-end is also used to receive information to be sent to the devices.

The Internet of Things is the paradigm of an exponentially increasing number of physical objects being connected to the Internet. Electronic devices are increasingly deployed to provide information for an innumerable type of applications in loT environments and involve many different sensor or actuator types developed by communities working in different domains. M2M/IoT systems combine different actuators/sensors, different backend functionalities and displays. The heterogeneity of these elements means that interoperability is difficult. Although the components come from a reduced subset, the combinations are rarely repeated. Unfortunately every problem requires different, specific solutions that can not be reused. So every M2M/IoT system requires extremely expensive technologies.

The most typical solution is to develop the devices from scratch, using base electronic components. Designers prototype the circuit, design a circuit board and order a short number of units to a factory. This method is expensive and offers no reusability.

Some manufacturers, such as the creators of Twine (a wireless square with sensors and a simple web app to set rules), the "Ninja Blocks" (which provides a hardware and web-service platform that lets you control and build apps that talk to connected devices) or the network operator Orange, have developed closed devices with an associated backend. When a user buys a device gets also access to the backend to manage it. Every device has a fixed set of sensors and actuators. This can only give solutions to certain problems and there is an extra cost as every user has to pay the full set of electronics.

In other cases, manufacturers develop specific devices, tuned finely for a single task. This is only done for large markets. When the market is not so big the solution is expensive and manufacturers do not produce it.

Some other existing solutions apply modularity. Arduino or Libelium sell modules that interconnect physically between them, building physical devices. But they have to be programmed specifically for each combination, and the backend has to be provided or developed for each application. The manufacturer of Internet-connected products and provider of cloud services, ioBridge, has physical modules, sensors and simple actuators, which connect to a central "gateway" module that connects to a web backend. But these modules are only for prototyping, not for final use, and have no casing.

The objective technical problem is to connect different elements of M2M systems in order to allow them to communicate over mobile networks in an efficient way which is common for every possible element of loT frameworks and independent of the mobile network technology used for communications.

### SUMMARY OF THE INVENTION

The present invention serves to solve the aforesaid problem by providing a system of which optimizes M2M communications and deployments:
In accordance with an aspect of the invention, a system is provided for remote managing of physical devices by a user, the system using M2M communications and comprising a backend with which the physical devices communicate and a frontend through which the user exchanges information with the physical devices to be managed. Each physical device of the proposed system comprises at least one physical module and a power supply connected by an internal bus. In addition, at least one physical device comprises a core module connected to at least one physical module and the power supply by the internal bus. The core module is configured to connect with the backend for exchanging information of all the physical modules to be managed, which are connected to said core module, by means of an internal bus o through radio links.

The present invention proposes a type of physical electronic device for receiving inputs or performing actions, called here the Module, that is controlled remotely through a telecommunications network and that can be combined freely to create different solutions.

Also, another type of electronic device, called here the Core, is proposed to be in charge of connecting the previous Modules to the remote management systems through the mobile telecommunications network, without requiring previous knowledge of the different types of Modules that can be connected. In order to connect Modules and Backend through the Core, the core doesn't have to know beforehand which Modules will be connected, nor which types of Modules will be connected and managed.

All the Modules and the Cores can switch off and any module (including the core) can be configured to restart the full system.

A Backend, which connects to the Cores, receives information and sends information to the Modules. Also the backend can execute automatic tasks upon certain conditions so that external systems can be easily connected accessing the system full functionality.

The system allows the manufacturers to describe and execute automatic tasks in the backend, involving different Modules, and independently of the specific kinds of Modules involved.

A frontend presents the information received from the Modules in a web interface and allows users to control them by means of as graphical interface that is generated automatically depending on the type of Modules connected to each Core.

A further aspect of the invention refers to a computer program product which comprises computer-executable instructions for implementing the functionalites of the modules previously disclosed in the described system, when the program is run on a programmable electronic device (microprocessor, controller, ASIC, FPGA ...) or in a distributted mode on a plurality of programmable electronic devices connected in network.

The presented aspects of the invention potentially have the following advantages when compared with the prior art:
- Commonly (standard) defined Modules to build different kinds of physical devices allow economies of scale, thus reducing the cost of manufacturing. Modularity allows users to build thousands of different solutions based in a few standard units. Connecting to build different types of Modules allows users to build any kind of automatism related to physical devices.
- The invention allows external systems to connect easily through a common (standard) interface.
- The invention deals with all the mobile communications network technologies (2G/GSM, 3G or beyond 3G networks), having so nearly global coverage.
- A web and app interfaces are included from the beginning of the M2M/IoT system deployment, so that customers can use it as soon as the blocks are connected, without requiring previous development or configuration processes.
- The invention allows manufacturers to create new Modules after the Cores have been sold, without modifying the existing Cores, because the Core does not need to know about the type of each Module connectable to it.
- The invention allows manufacturers to combine different funcionalities of manageable devices (sensors or actuators), since each Module is managed by the Backend as a single unit.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1. - It shows a block diagram of the modular architecture of a M2M system, using mobile IP networks, according to a possible embodiment of the invention.
Figure 2. - It shows building blocks for implementation of communications on Radio Links between blocks of the modular architecture of the M2M system shown in the previous Figure 1.
Figure 3. - It shows a flow diagram of communications between modules of the M2M system shown in the previous Figure 1.
Figure 4. - It shows a block diagram of data flows between modules of the M2M system shown in the previous Figure 1.

### DETAILED DESCRIPTION OF THE INVENTION

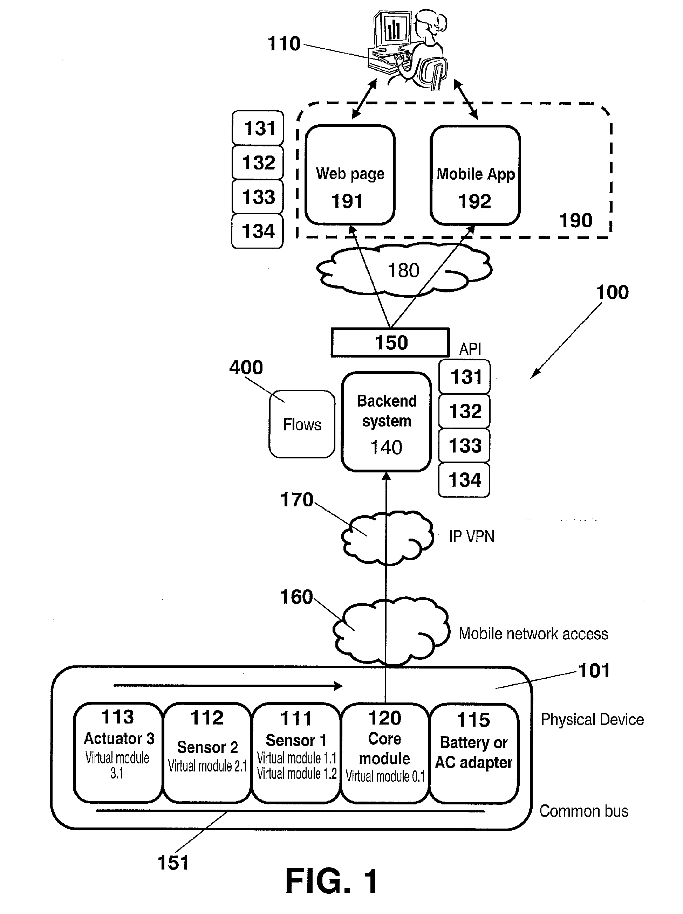

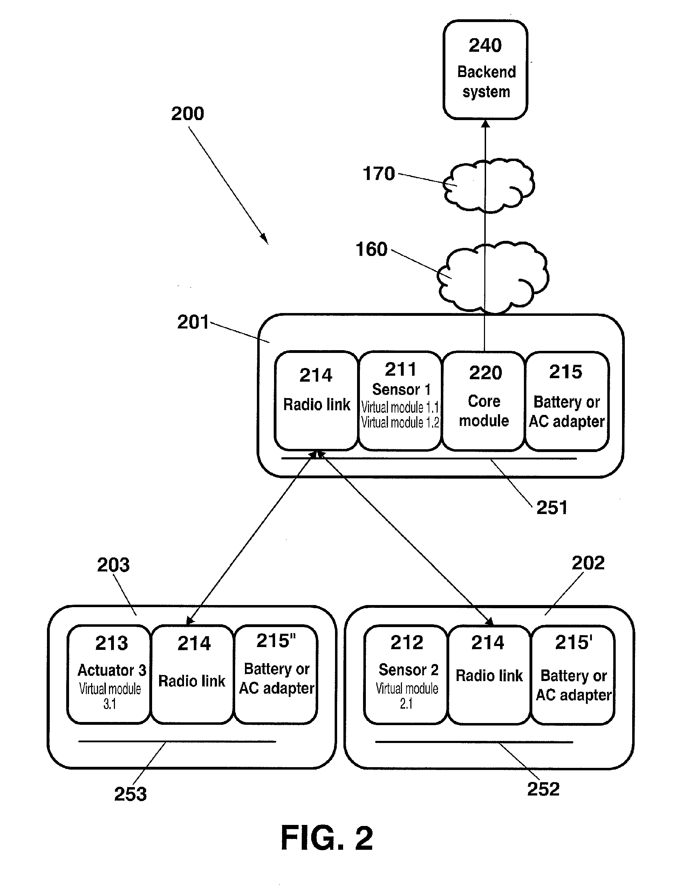

Figures 1 and 2 show the modular architecture of M2M systems (100, 200) to connect and communicate physical devices (101, 201, 202, 203) with a user (110) for remote management of these physical devices (101, 201, 202, 203), in accordance with a preferred embodiment of the invention.

Each physical device (101, 201, 202, 203) comprises at least one physical module (111, 112, 113, 211, 212, 213) that can define either a sensor device (111, 112, 211, 212) or an actuator device (113, 213). Additionally, the physical device (101, 201, 202, 203) comprises one core module (120, 220). A power supply (115, 215, 215', 215") is included in every physical device (101, 201, 202, 203) to provide all the, physical and core, modules with energy by means of a battery or AC adapter.

In order to minimize energy consumption, once the core module (120, 220) is connected to a Backend (140, 240) or when data has been transmitted/ received, the core module (120, 220) sends a power management command to every physical module (111, 112, 113, 211, 212, 213). Upon reception of this command, every physical module (111, 112, 113, 211, 212, 213) switches off. The core module (120, 220) then enters in a low-energy mode, just enabling a digital counter. When the counter finishes, the core module (120, 220) switches on, and writes an electronic pulse in the restart wire for restarting all the physical module (111, 112, 113, 211, 212, 213) again. Each physical module (111, 112, 113, 211, 212, 213) can be configured from the backend (140, 240) so that it cannot switch off when the core module (120, 220) sends the command, but the physical module (111, 112, 113, 211, 212, 213) can keep awake, for example, monitoring a certain variable. When a predefined condition is met, the awake physical module (111, 112, 113, 211, 212, 213) writes an electronic pulse in the restart wire so that the remaining, sleeping, modules can restart and the core module (120, 220) can make a new connection to the backend (140, 240).

A common internal bus (151, 251, 252, 253) runs through each physical device (101, 201, 202, 203) to connect internally all their physical modules (111, 112, 113, 211, 212, 213), including the core module (120, 220), to the Battery or AC adapter of the power supply (115, 215, 215', 215"). This internal bus (151, 251, 252, 253) is composed by several conductive wires, to which every, physical or core, module is connected as follows:
- Vcc and GND, thus giving power to every, physical and core, module.
- Data connections or wires where every physical/core module can read/write data for communicating all the modules.
- Restart wire: a wire where, if any physical or core module writes an electronic pulse, the rest of the modules will power on, as described before.

The user (110) deploys the physical device wherever she/he wants, as far as a battery or a power supply connection is available for said physical device and there is mobile network connectivity to connect the physical device with a mobile access network (160, 260), e.g., GSM network or UTRAN.

Optionally, as shown in Figure 2, the user (110) can deploy the physical modules (212, 213) physically separated from the core module (220). In this case, another kind of modules, called Radio Link module (214), are employed. The Radio Link modules (214) communicate between them using a short range radio link, e.g., WiFi, in order to exchange the data transmitted through the internal buses (251, 252, 253). The core module (220) detects all the physical modules (211, 212, 213) connected through radio link modules (214) and manages them as if they were connected through the same physical bus.

The physical modules (111, 112, 113, 211, 212, 213) can be connected to the core module (120, 220) as the user's whims are. In the examples of Figures 1-2, the user (110) has connected two sensor devices (111, 112, 211, 212) and one actuator (113, 213).

Each physical module (111, 112, 113) has associated one or more abstract or virtual modules (131, 132, 133, 134), each virtual module (131, 132, 133, 134) being managed individually as a single unit in the backend (140), so that manufacturers can build physical modules that combine several different functionalities.

The core module (120, 220) internally executes another Virtual Module, so that the Backend (140, 240) can receive and transmit configuration information. The Core module (120, 220) detects all the connected modules and assigns dynamically each one to a single identifier, for example, by I2C based addressing. The core module (120, 220) does not ask or request from the connected modules any knowledgement of the Module types. The core module (120, 220) connects through the mobile access network (160) to an IP network (170), which is either a VPN or the main Internet. Using this connectivity, the core module (120, 220) employs Hyper Text Transfer -Secure- Protocols, HTTP or HTTPS, over TCP connections to access the Backend (140, 240).

The backend (140, 240) receives connection requests from the Core modules (120, 220) and, once the connection between them, core and backend, is established, the backend (140, 240) receives information through these connections from the different connected physical modules (111, 112, 113, 211, 212, 213). This information is stored in a database. The backend (140, 240) stores in a database: the information received from the physical modules as well as the information to be sent to the physical modules (111, 112, 113, 211, 212, 213), data flows and other configuration information such as passwords, users' identifiers, etc... Once the Core module (120, 220) has relayed the information from every physical modules (111, 112, 113, 211, 212, 213), the Backend (140, 240) starts to reply with all the information to be sent to each one of these modules.

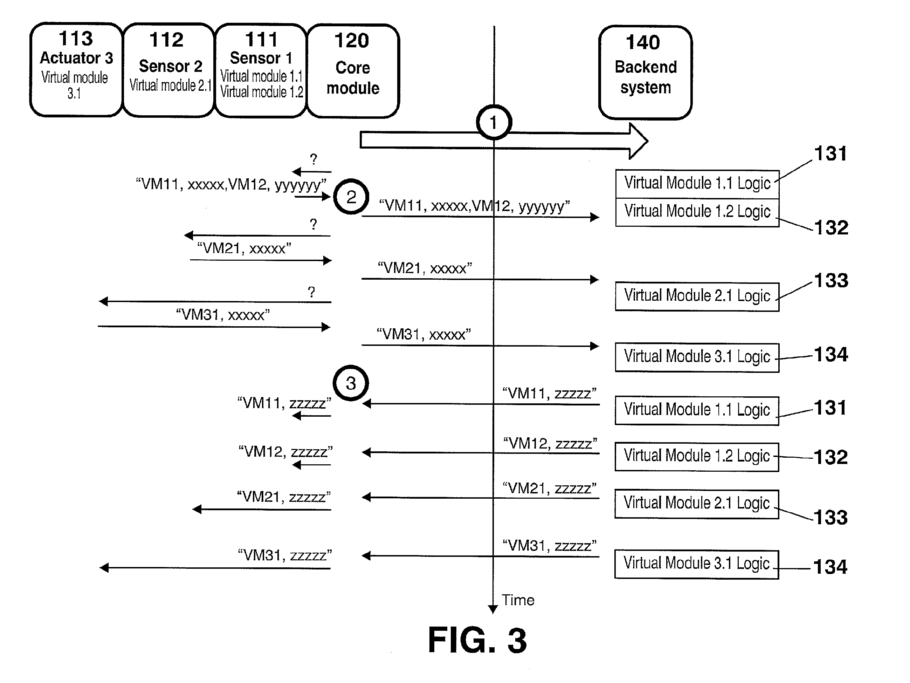

This information flow between the core module (120, 220) and the backend (140, 240) is illustrated in Figure 3. The communication between the core module (120, 220) and the backend (140, 240) can be described in the three following steps:
- Step 1: Connection (1)

The core module (120) connects to the backend (140) when any of these conditions is met:
- The core module (120) is switched on
- A physical module (111, 112, 113) requests a communication
- The core module (120) receives a request from the Backend (140)

Connection between the core module (120) and the backend (140) is established on a TCP/IP connection, e.g., using the HTTP protocol. The core module (120) is identified in the first information sent to the backend (140) through this connection.
- Step 2: Core requests (2)

The core module (120) requests every physical module (111, 112, 113) the information from its associated Virtual Modules. For example, in Figures 1 and 3, a physical module (111) defining a sensor device has two virtual modules (131, 132) associated, while another physical module (112) defining also a sensor device has only one virtual module (133) associated, and there is a physical module (113) defining an actuator device associated with a virtual module (134).

Every physical module (111, 112, 113) sends, for every Virtual Module (131, 132, 133, 134), an identifier of the virtual module type, e.g., selected from physical sensor or actuator, and a sequence of bytes with information to be managed and related to the virtual module.

The core module (120) gets this information from the physical modules (111, 112, 113) and resends it right to the backend (140) with no further interpretation, i.e., the core module (120) just relays the information.

The backend (140) receives the information on Virtual Module Type and, according to it, selects a software code to manage the next information received from the core module (120) in reply to the requests sent to the physical modules (111, 112, 113).
- Step 3: Backend answers (3)

Once the core module (120) has requested and relayed all the information from every physical module (111, 112, 113), the backend (140) replies back with an answer generated by the software code corresponding to the type of Virtual Module (131, 132, 133, 134) whose information is currentlly being managed at the backend (140). Every answer gets to the core module (120), which retransmits it to the adequate physical module (111, 112, 113) associated with said Virtual Module (131, 132, 133, 134).

The backend (140) stores specific code for every type of Virtual Module (131, 132, 133, 134). This code receives and stores the information from the physical module (111, 112, 113) and generates for said type of Virtual Module (131, 132, 133, 134) the specific answer, which depends upon the received information.

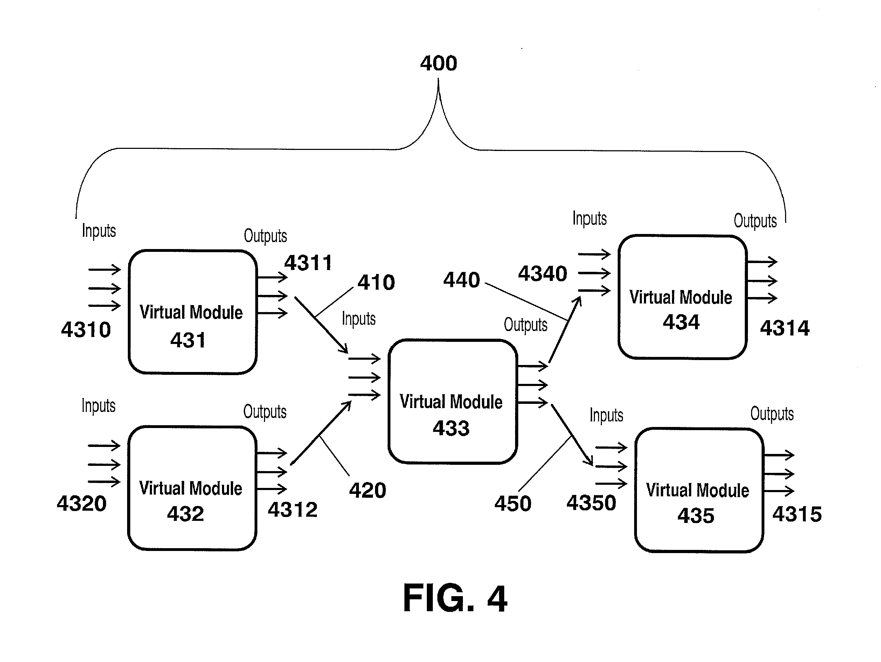

On the other hand, the backend (140) also executes the data flows (400), as shown in Figure 4, which are specified by the user (110) and describe the manner to deal with incoming data. Every data flow (400) consists of at least one Virtual Module (431, 432, 433, 434, 435) with its respective data inputs (4310, 4320, 4330, 4340, 4350) and data outputs (4311, 4312, 4313, 4314, 4315) and connections (410, 420, 440, 450) that connect inputs and outputs of different Virtual Modules (431, 432, 433, 434, 435). These Virtual Modules (431, 432, 433, 434, 435) can be of several types:
- Physical Virtual Modules represent virtual modules deployed in physical devices (101, 201, 202, 203), for example, virtual modules representing a Temperature Sensor or a Servo controller. Outputs from these modules can be sensing or perceived data.
- Logical Virtual Modules are not related to any physical device, but they can execute logical operations using the inputs and transforming them into different outputs. For example, a Sum module sums the incoming inputs.
- Trigger Virtual Modules receive inputs, but only generate outputs if the inputs fulfill a specified condition; for example, if one input is bigger than 30, said input is transferred to an output.
- Internet Virtual Modules transmit ouputs and/or receive inputs from Internet services or external private systems; for example, transmitting a temperature to a corporate system or receiving the weather forecast for tomorrow.

Connecting the above distinguished types of Virtual Modules (431, 432, 433, 434, 435) allows any user (110) to build any kind of automatism based on the different possible physical devices.

The backend (140) can also initiate communications with the connected core module (120) using the most adequate method which depends on the technology of the mobile network (160) used for connection with the physical device (101) comprising the core module (120), for instance:
- Opening a TCP/IP connection to the Core.
- Sending a UDP packet asking for a connection with the Core
- Sending a SMS to the physical device comprising the Core
- Placing a Voice call to the physical device comprising the Core and hanging immediately.

All the functionalities of the backend (140) and data flows (400) are accessible by a frontend (190) through TCP/IP connections (180). The frontend (190) comprises an access interface for providing the user (110) with access to the backend the backend (140) and data flows (400). This access interface can be selected from an application program interface (150), a Web page (191) and a Mobile Application (192). Both the Web page (191) and Mobile Application (192) can offer, for each Core module (120), a page or screen where different blocks appear, representing each virtual module (131, 132, 133, 134). Only connected virtual modules are represented. Both the Web page (191) and Mobile Application (192) can also be used to configure data flows (400) by the user (110).

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. - A system for remote managing of physical devices (101, 201, 202, 203) by a user (110), the system using M2M communications and comprising a backend (140, 240) with which the physical devices (101, 201, 202, 203) communicate and a frontend (190) through which the user (110) exchanges information with the physical devices (101, 201, 202, 203), **characterized in that** each physical device (101, 201, 202, 203) comprises at least one physical module (111, 112, 113, 211, 212, 213) and a power supply (115, 215, 215', 215") connected by an internal bus (151, 251, 252, 253), and at least one physical device (101, 201) further comprises a core module (120, 220) connected to the power supply (115, 215) by the internal bus (151, 251) and connected to at least one physical module (111, 112, 113, 211, 212, 213), and the core module (120, 220) being configured to connect with the backend (140, 240) for exchanging information of all the physical modules (111, 112, 113, 211, 212, 213) connected to said core module (120, 220).

2. - The system according to claim 1, wherein the core module (120, 220) is connected to at least one physical module (111, 112, 113, 211) by the internal bus (151,251).

3. - The system according to claim 1, wherein the physical device (201, 202, 203) further comprises a radio link module (214) which uses a short range radio link to exchange information from the internal bus (251, 252, 253) with the core module (220) of a physical device (201) comprising the radio link module (214), and wherein the core module (220) connects to all the physical modules (211, 212, 213) of the physical device (201, 202, 203) comprising said radio link module (214).

4. - The system according to any preceding claim, wherein the at least one physical module (111, 112, 113, 211, 212, 213) defines a device selected from a sensor (111, 112, 211, 212) and an actuator (113, 213).

5. - The system according to any preceding claim, wherein the core module (120, 220) executes internally a virtual model for exchanging configuration information with the Backend (140, 240).

6. - The system according to any preceding claim, wherein each physical module (111, 112, 113) has associated at least one virtual module (131, 132, 133, 134), each virtual module (131, 132, 133, 134) being managed individually at the backend (140, 240).

7. - The system according to any preceding claim, wherein the backend (140, 240) executes data flows (400) which are specified by the user (110) to provide information used by the backend (140, 240) to select a software code for managing the information received from the core module (120, 220), each data flow (400) consisting of at least one virtual module (431, 432, 433, 434, 435) with data inputs (4310, 4320, 4330, 4340, 4350) and data outputs (4311, 4312, 4313, 4314, 4315) and connections (410, 420, 440, 450) which connect data inputs (4330, 4340, 4350) and data outputs (4311, 4312, 4313) of different Virtual Modules (431, 432, 433,434,435).

8. - The system according to any of claims 5-7, wherein the virtual module is of a virtual module type selected from:
- physical virtual module type for virtual modules deployed in physical devices (101, 201, 202, 203) and describing a device selected from a sensor (111, 112, 211, 212) and an actuator (113, 213);
- logical virtual module type for virtual modules unrelated from any physical device (101, 201, 202, 203) and executing logical operations with the data inputs for transforming them into different outputs;
- trigger virtual module type for virtual modules which generate data outputs only if the data inputs fulfill a predefined condition;
- Internet virtual module type for virtual modules which transmit data ouputs and receive data inputs from external servers connected to Internet.

9. - The system according to any of claims 5-8, wherein the core module (120, 220) sends requests to every physical module (111, 112, 113, 211, 212, 213) to get information from the associated virtual modules, receives from each physical module (111, 112, 113, 211, 212, 213) an identifier of the virtual module type for every associated virtual modules and data related to said virtual modules, and relays the information to the backend (140, 240).

10. - The system according to claim 9, wherein the backend (140, 240) receives the information relayed by the core module (120), selects a software code to manage said information according to the indentifier of virtual module type sent by the physical module (111, 112, 113, 211, 212, 213), and replies back with an answer generated by the software code, the answer being relayed by the core module (120, 220) to said physical module (111, 112, 113, 211, 212, 213).

11. - The system according to any preceding claim, wherein the core module (120, 220) connects through a mobile access network (160) to an IP network (170) to which the backend (140, 240) is connected and the core module (120, 220) uses TCP connections to connect with the backend (140, 240).

12. - The system according to claim 11, wherein the mobile access network (160) is selected from 2G mobile network and 3G mobile network and the IP network (170) is selected from a Virtual Private Network or Internet Network.

13. - The system according to any of claims 11-12, wherein the core module (120, 220) uses HTTP or HTTPS over the TCP connections with the backend (140, 240).

14. - The system according to any preceding claim, wherein the core module (120, 220) connects to the backend (140, 240) when any of these conditions is met:
- the core module (120, 220) is switched on,
- at least one physical module (111, 112, 113, 211, 212, 213) connected to the core module (120, 220) requests communication
- the core module (120, 220) receives a request from the Backend (140).

15. - The system according to any of claims 7-14, wherein the frontend (190) is connected with the backend (140, 240) through TCP/IP connections (180) to access data flows (400) and comprises an access interface for providing the user (110) with access to the backend (140, 240), the access interface being selected from an application program interface (150), a Web page (191) and a Mobile Application (192).
